(19) **Europäisches Patentamt**
**European Patent Office**
**Office européen des brevets**

(11) **EP 4 424 413 A1**

(12) **EUROPEAN PATENT APPLICATION**

(43) Date of publication:
**04.09.2024 Bulletin 2024/36**

(21) Application number: **23158992.0**

(22) Date of filing: **28.02.2023**

(51) International Patent Classification (IPC):
**B01J 19/00** (2006.01)  **B01J 19/18** (2006.01)
**C08F 222/08** (2006.01)  **B01J 19/20** (2006.01)

(52) Cooperative Patent Classification (CPC):
**B01J 19/0066; B01F 27/1921; B01F 27/861;**
**B01F 27/92; B01J 19/1843; B01J 19/1875;**
**B01J 19/20; C08F 222/08;** B01J 2204/002;
B01J 2219/00168

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **BERGSTRA, Michiel**
**3583 Beringen (BE)**
• **SLEIJSTER, Henry**
**6161 Sittard-Geleen (NL)**
• **WURNITSCH, Christof**
**4021 Linz (AT)**

(74) Representative: **Kador & Partner Part mbB**
**Corneliusstraße 15**
**80469 München (DE)**

(54) **RAPID MIXING POLYMERIZATION PROCESS**

(57) The present invention relates to a process for polymerization of at least one olefin monomer in a polymerization reactor assembly, the polymerization reactor assembly comprising a reactor (1) having a housing (2) defining an inner space (3), the reactor (1) comprising a) at least one inlet (4); b) at least one outlet (5); c) a draft tube (6) having a substantially cylindrical shape and an inner space (7), wherein the draft tube (6) is located within the inner space (3) of the reactor (1) so that an upper opening (10) and a lower opening (11) of the draft tube (6) are fluidly connected with the inner space (3) of the reactor (1), and d) a stirrer (12) located within the inner space (3) of the reactor (1) and comprising a stirrer blade (14) having a helical shape, wherein the axis (8) of the draft tube and the axis (15) of the stirrer blade (14) are coinciding, the stirrer blade (14) extending concentrically with respect to the draft tube (6) and the housing (2) of the reactor (1), and e) secondary mixing means (23) for mixing the fluid inside the reactor (1) by rotating motion, wherein the inner space (3) of the reactor (1) comprises sections A, B, C, and D, wherein section A is the space defined by the upper end of the housing (2) of the reactor (1) and a first plane (10a) oriented transversally to the axis (8) of the draft tube and arranged at the upper end of the stirrer (12), section B is the space defined by the housing (2) of the reactor (1), the outer surface of the draft tube (6), the first plane (10a) and a second plane (11a) oriented transversally to the axis (8) of the draft tube (6), section C is the space defined by the lower end of the housing (2) of the reactor (1) and the second plane (11a), and section D is the inner space (7) of the draft tube (6), wherein the stirrer (12) is rotatable inside the housing (2) of the reactor (1) to provide a mixing motion to fluids if present inside the reactor (1), the process comprising the steps of I. introducing the at least one olefin monomer, at least one polymerization catalyst, and at least one solvent via the at least one inlet (4) into section C to form a reaction mixture, II. rotating the stirrer (12) to force at least a part of the reaction mixture from section C via section B to section A and from section A via section D to section C, III. thereby polymerizing the at least one olefin monomer forming a polymer in said reaction mixture, IV. withdrawing at least a part of the reaction mixture via the at least one outlet (5) from section A to obtain an olefin polymer as a product.

EP 4 424 413 A1

**Fig. 1**

**Description**

The present invention is concerned with a process for polymerization involving rapid mixing of bulk components with introduced reactants.

**Background of the invention**

Polymerization reactions are known to be one of the most complex types of chemical reactions. There are many reasons for the complexity of these reactions such as co-presence of different phases inside the reactor, high viscosity of reactor contents and large amounts of heat produced during the reaction. Furthermore, the complexity of these reactions is influenced by the existence of different reaction mechanisms, such as various chain growth reactions, chain transfer reactions, catalyst activation and deactivating reactions.

Each of these reasons and in particular the combination of the reasons makes the design and operation of polymerization reactors for polymerization reactions non-trivial. One major concern for the design of polymerization reactors and processes using such reactors is efficient mixing of the components in the reactor, especially at high reaction rates, typical for solution polymerization taking place at relative higher temperature.

There have been several approaches applied in the prior art to solve this problem. One approach has been to use tubular reactors. The high surface area of tube or loop reactors assists in the removal of heat of the reaction. Mixing can occur within the reactor already by convection of the differently heated parts of the polymerization components. Furthermore, already the impulse of the introduced streams of polymerization reactants can have an impact on mixing in the reactor.

In solution polymerization the temperature is usually above the precipitation temperature. However higher reactor temperature may also lead to the undesirable formation of low molecular weight polymer. At higher temperatures, reaction rates are faster and gradients of concentrations in reactants become undesirably high. Thus, there are usually temperature limitations, which restrict the operating flexibility of a tube or loop reactor. Furthermore, the control of such a mixing is very poor, resulting in drawbacks in view of reaction control and product quality. Therefore, in the prior art, mixers have been used to control the flow patterns and, hence, the mixing within the polymerization reactor.

In the US patent US 4,921,906 a polymerization reactor and process is disclosed, comprising a substantially cylindrical polymerization reactor with an inlet and an outlet, wherein the polymerization reactor comprises a coaxial guide tube, which is connected on both ends with the reactor. Furthermore, the reactor provides screw ribbons between the inner reactor wall and the guide tube, which are rotatably mounted around the axis of the reactor. Furthermore, at least one propeller mixer is installed in the guide tube. It is stated in US 4,921,906 that such an assembly can achieve better homogeneity and rapid equalization times.

In the US patent US 6,319,996 B1 a reactor and a process for solution polymerization of olefins is presented, wherein the reactor comprises a mixing device consisting of a vertical draft tube with an impeller at the bottom and the top of the draft tube driven by a rotatable shaft, wherein within the draft tube at least one helical ribbon is also connected to the rotatable shaft.

US patent application US 2018/0050318 A1 discloses a reactor and process for polymerization. The reactor comprises a draft tube and a rotatably mounted helical ribbon type stirrer surrounding the draft tube. The lower end and the top end of the stirrer are connected to ring-shaped plates having holes for solution throughput. To the bottom plate a stirrer is connected for producing a flow into the draft tube. The advantages of such an assembly are that the mixing between higher temperature bulk solution and lower temperature reactants introduced into the reactor is enhanced and thus the quality of the produced polymer is improved.

**Problem to be solved**

In all of these prior art documents, the reactor is used in the polymerization process in a manner that the reactants enter the reactor at the bottom and are further forced up through the guide tube to the top part of the reactor and further transported towards the bottom of the reactor via the screw ribbons.

Generally, at high viscosities of the mixture, i.e. when producing high molecular weight polymers, the helix is a powerful mixer and the macroscopic mixing within the reactor is dominated by the helix. The circulation flow is high and circulation times are short. This results in high number of circulations per mean residence time and a relative well back-mixed system. The polymer produced at this viscosity has a rather narrow molecular weight distribution (MWD), as the reactor is nearly ideally mixed.

However, at low viscosities of the mixture, i.e. when producing low molecular weight polymers, the helix is a less efficient mixer. Moreover, the impeller installed below the support ring of the helix is generating a counter current directed flow (i.e. upwards at the outer holes of the support plate). Hence, the system is not well back-mixed and the local mixing flow pattern in the bottom section changes, both impacting the mixing behaviour. Due to the less well-mixed system, the polymer produced will have a broader MWD.

Furthermore, general problems occur when upscaling reactors and processes as described in the prior art. Generally, during upscaling of such setups the mean residence time and the circulation time can get very close to each other (i.e. $\tau \approx t_{circulation}$). It can even occur that the circulation time exceeds the mean residence time when the throughput of the reactor is increased. This results in a different polymer product (e.g. broader MWD, different chemical composition distribution (CCD)), higher catalyst consumption and higher active catalyst concentration in the effluent of the reactor.

### Object of the invention

In view of the problem as set out above, it is one object underlying the present invention to find a process for polymerization, in particular solution polymerization, which provides nearly ideal mixing of the reactants and, hence, respective properties of the resulting polymer (i.e. narrow MWD). This object should be in particular achieved for low and high viscosity mixtures.

Furthermore, also in view of the problems as described above, it is a second object underlying the present invention to provide a polymerization process, in particular a solution polymerization process, which allows for upscaling without significantly affecting the properties of the resulting polymer.

### Summary of the invention

It has now surprisingly been found that above-mentioned objects can be achieved by a process for polymerization of at least one olefin monomer in a polymerization reactor assembly, the polymerization reactor assembly comprising a reactor (1) having a housing (2) defining an inner space (3), the reactor (1) comprising:

    a) at least one inlet (4);

    b) at least one outlet (5);

    c) a draft tube (6) having a substantially cylindrical shape and an inner space (7), wherein the draft tube (6) is located within the inner space (3) of the reactor (1) so that an upper opening (10) and a lower opening (11) of the draft tube (6) are fluidly connected with the inner space (3) of the reactor (1), and

    d) a stirrer (12) located within the inner space (3) of the reactor (1) and comprising a stirrer blade (14) having a helical shape, wherein the axis (8) of the draft tube and the axis (15) of the stirrer blade (14) are coinciding, the stirrer blade (14) extending concentrically with respect to the draft tube (6) and the housing (2) of the reactor (1), and

    e) secondary mixing means (23) for mixing the fluid inside the reactor (1) by rotating motion,

wherein the inner space (3) of the reactor (1) comprises sections A, B, C, and D, wherein

-     section A is the space defined by the upper end of the housing (2) of the reactor (1) and a first plane (10a) oriented transversally to the axis (8) of the draft tube and arranged at the upper end of the stirrer (12),

-     section B is the space defined by the housing (2) of the reactor (1), the outer surface of the draft tube (6), the first plane (10a) and a second plane (11a) oriented transversally to the axis (8) of the draft tube and arranged at the lower opening (11) of the draft tube (6),

-     section C is the space defined by the lower end of the housing (2) of the reactor (1) and the second plane (11a), and

-     section D is the inner space (7) of the draft tube (6),

wherein the stirrer (12) is rotatable inside the housing (2) of the reactor (1) to provide a mixing motion to fluids if present inside the reactor (1),
the process comprising the steps of

    I. introducing the at least one olefin monomer, at least one polymerization catalyst, and at least one solvent via the at least one inlet (4) into section C to form a reaction mixture,

    II. rotating the stirrer (12) to force at least a part of the reaction mixture from section C via section B to section A and from section A via section D to section C,

III. thereby polymerizing the at least one olefin monomer forming a polymer in said reaction mixture,

IV. withdrawing at least a part of the reaction mixture via the at least one outlet (5) from section A to obtain an olefin polymer as a product.

Preferred features of the inventive process are defined in the appended dependent claims.

**Definitions**

The term 'helical ribbon blade' as used herein denotes a plane blade, mostly in rectangular shape if not wound, which is wound around an axis or essentially cylindrical shape along its longer side. Consequently, it extends from the axis or the cylindrical shape in a certain angle. Ideally, this angle is perpendicular to the surface of the cylindrical shape. Furthermore, ideally, the slope of the winding of the blade is always identical. Hence, also the distances between each layer of the helical ribbon blade is always essentially equal. Due to its helical nature, the helical ribbon blade can be wound around the axis or the cylindrical shape in two orientations, i.e. upwards clockwise or upward counter-clockwise.
The term 'axis' as used herein has to be understood as a mathematical axis, i.e. a line. Hence, the axis of a cylinder is a line traversing through the cylinder and thereby being parallel to the height of the cylinder and cutting at the centre of the cyclic/ circular areas formed by the cylinder at the two bases ( top and bottom) . Likewise, the axis of a helical shape behaves accordingly in relation to the cylinder defined by the helical shape, i.e. is an axis around which the helical shape is wound.
The term 'closest distance' between the stirrer blade and the reactor walls as used herein is the distance which is smallest for all conceivable rotation combinations between the stirrer and the reactor walls. The same holds for the closest distance as used for the top and bottom plate.

**Description of the drawings**

Figure 1 shows a schematic drawing of a reactor assembly as used in the process according to the present invention showing the sections A-D.

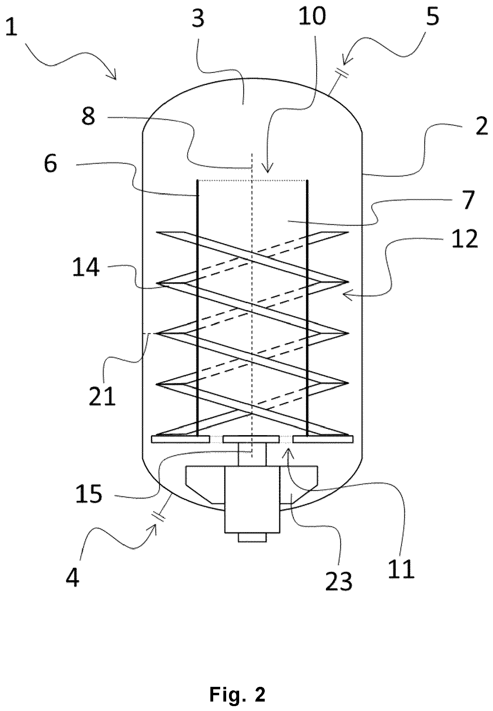

Figure 2 shows a schematic drawing of a reactor assembly as used in the process according to the present invention. According to this embodiment, the stirrer (12) is installed outside the draft tube (6).

Figure 3 shows a schematic drawing of another reactor assembly as used in the process according to the present invention. According to this embodiment, the stirrer (12) is installed inside the draft tube (6).

Figure 4 shows a schematic drawing of another reactor assembly as used in the process according to the present invention further comprising a top plate (13), a bottom plate (16) and stirrer baffles (22).

It should be understood that the schematic drawing does not reflect the actual dimensions of the reactor. In particular the closest distance between the bottom and top plate and the reactor walls and the stirrer blade and the reactor walls are depicted significantly larger than in reality for better readability of the Figures.

Reference signs:

| | |
|---|---|
| 1 | reactor |
| 2 | housing of the reactor |
| 3 | inner space of the reactor |
| 4 | at least one inlet |
| 5 | at least one outlet |
| 6 | draft tube |
| 7 | inner space of the draft tube |
| 8 | axis of rotation of the draft tube |

9       axis of rotation of the reactor
10      upper opening of the draft tube
10a     first plane
11      lower opening of the draft tube
11a     second plane
12      stirrer
13      top plate of the stirrer
14      stirrer blade
15      axis of rotation of the stirrer blade
16      bottom plate of the stirrer
17      at least one first opening of the top plate
18      at least one first opening of the bottom plate
19      at least one second opening of the bottom plate
20      at least one side opening of the draft tube
21      closest distance between housing and stirrer blade
22      at least one stirrer baffle
23      at least one impeller blade
24      dip pipe
25      closest distance between housing and top plate or bottom plate
A       space defined by the upper end of the housing (2) of the reactor (1) and a first plane (10a) oriented transversally to the axis (8) of the draft tube and arranged at the upper end of the stirrer (12)
B       space defined by the housing (2), the outer surface of the draft tube (6), the first plane (10a) and a second plane (11a) oriented transversally to the axis (8) of the draft tube and arranged at the lower opening (11) of the draft tube (6)
C       space defined by lower end of the housing (2) of the reactor (1) and the second plane (11a)
D       inner space (7) of the draft tube (6)

## Detailed description of the invention

In the following, the invention is described in detail based on the Figures and the embodiments as found therein. First of all, the reactor assembly as used in the process according to the invention is described in detail.

Process using reactor assembly

The basic concept of the present invention is the provision of a process using a polymerization reactor assembly, which enables rapid homogenization of the bulk components and introduced reactants at low and high viscosities of the mixture and the ability to be upscalable without significant change of polymer properties.

The present invention solves this problem in general inter alia by provision of several distinct sections of the polymerization reactor assembly, which are fluidly interconnected and the flow of components through which is enabled and controlled by a homogenization device, i.e. a stirrer or via multiple stirrers, with flow direction reverse to that conventionally used.

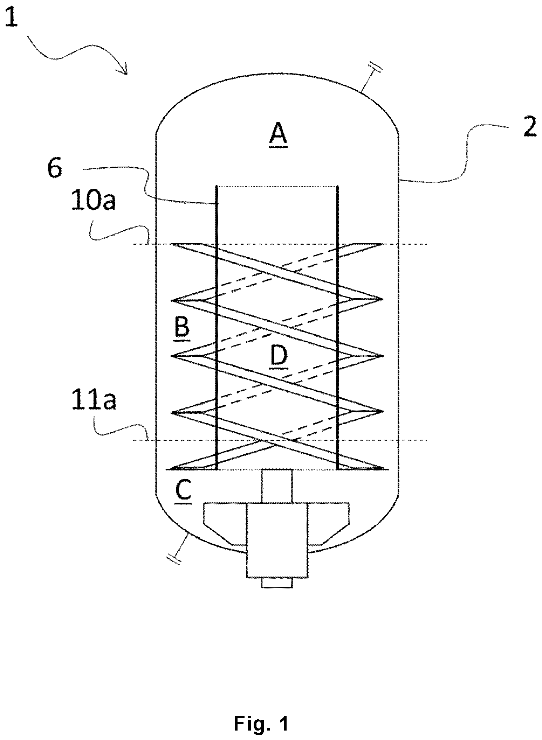

Therefore, the process of the present invention uses a polymerization reactor assembly as depicted in Figure 1, comprising a reactor (1) having a housing (2) defining an inner space (3), the reactor (1) comprising

a) at least one inlet (4);

b) at least one outlet (5);

c) a draft tube (6) having a substantially cylindrical shape and an inner space (7), wherein the draft tube (6) is located within the inner space (3) of the reactor (1) so that an upper opening (10) and a lower opening (11) of the draft tube (6) are fluidly connected with the inner space (3) of the reactor (1), and

d) a stirrer (12) located within the inner space (3) of the reactor (1) and comprising a stirrer blade (14) having a helical shape, wherein the axis (8) of the draft tube and the axis (15) of the stirrer blade (14) are coinciding, the stirrer blade (14) extending concentrically with respect to the draft tube (6) and the housing (2) of the reactor (1), and

e) secondary mixing means (23) for mixing the fluid inside the reactor (1) by rotating motion,

wherein the inner space (3) of the reactor (1) comprises sections A, B, C, and D, wherein

- section A is the space defined by the upper end of the housing (2) of the reactor (1) and a first plane (10a) oriented transversally to the axis (8) of the draft tube and arranged at the upper end of the stirrer (12),

- section B is the space defined by the housing (2) of the reactor (1), the outer surface of the draft tube (6), the first plane (10a) and a second plane (11a) oriented transversally to the axis (8) of the draft tube and arranged at the lower opening (11) of the draft tube (6),

- section C is the space defined by the lower end of the housing (2) of the reactor (1) and the second plane (11a), and

- section D is the inner space (7) of the draft tube (6),

wherein the stirrer (12) is rotatable inside the housing (2) of the reactor (1) to provide a mixing motion to fluids, if present, inside the reactor (1).

The use of such a polymerization reactor enables conducting the polymerization process involving steps I. to IV. as defined above.

Preferably, the secondary mixing means (23) comprises at least one impeller blade.

It is further preferred that the stirrer blade (14) is installed in section B, but it can alternatively be installed in section D. If it is installed in section B, the closest distance (21) between the reactor housing (2) and the stirrer blade (14) is preferably between 0.1 and 1 % of the inner diameter of the housing (2).

In further embodiments of the invention in accordance with the above configurations, the stirrer (12) may further comprise a top plate (13) located above theupper end of the stirrer blade (14), and/or a bottom plate (16) located below the lowerend of the stirrer blade (14). The top plate (13) may preferably have at least one first opening (17) fluidly connecting section A and section B, and/or the bottom plate (16) may preferably have at least one first opening (18) fluidly connecting section B and section C, and/or the bottom plate (16) may preferably have at least one second opening (19) fluidly connecting section C and section D.

According to these preferred embodiments, the at least one impeller blade may extend from the bottom plate (16) into section C.

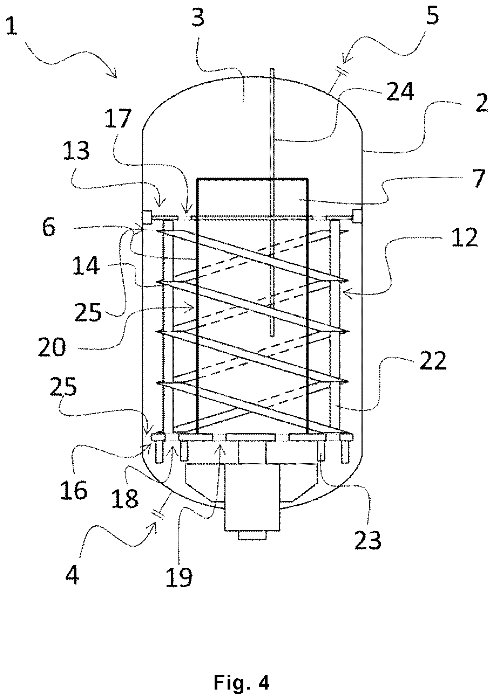

The upper surface of the top plate (13) and the lower surface of the bottom plate (16) are illustrated in Figure 4 by the grey areas. Respectively, the lower surface of the top plate (13) and the upper surface of the bottom plate (16) have to be understood in that the terms 'upper' and 'lower' are interpreted in view of the direction of the gravitational force, i.e. the direction of the axis of the reactor (9). Preferably, the second opening (19) of the bottom plate (16) is placed in the bottom plate (16) so that upon rotation of the bottom plate (16) also the second opening (19) rotates. Hence, preferably, the second opening (19) is not concentric to the lower opening (11) of the draft tube. Such an arrangement ensures that the at least one second opening (19) applies a shear force upon the flow exiting section D or entering C. Hence, such an at least one second opening (19) can replace a separate impeller for mixing the flow entering the section D reducing complexity and maintaining time of the reactor assembly. However, preferably, the reactor assembly used in the process of the present invention comprises a separate impeller for mixing the flow leaving the section D.

As the bottom (16) and top plate (13) of the stirrer (12) are rotating with the stirrer blade (14), also the openings provided therein are rotating relative to the reactor (1), the draft tube (6) and also the components/reactants in the reactor. If a flow is forced through these openings while they are rotating, a shear force is applied to this flow. Hence, in view of the flow direction of the flow passing the opening, downstream of the opening, turbulent regimes are formed. This is in particular relevant for the transition from section D to C and from section C to B. Hence, the reactants introduced through the at least one inlet (4) enter section C, which has turbulent flow regimes due to the flow entering from section D through the at least one second opening (19) of the bottom plate. Therefore, the reactants are rapidly mixed with the bulk components and after being forced into section B enter again a turbulent regime due to passing the at least one first opening (18) of the bottom plate (16). Thus, such a setup has the advantage that the reactants introduced into the reactor are rapidly mixed with the bulk components.

Accordingly, in section B, the stirrer blade (14) forces the bulk components to a rolling movement along the helical ribbon blade (14) also creating a turbulent regime and thorough mixing within section B. Alternatively the stirrer blade (14) may be located in section D, for example inside the draft tube (6).

Preferably, the housing (2) of the reactor (1) is a jacketed housing. In such a jacketed housing a liquid can be circulated, which controls the heat of the reactor walls to avoid precipitation. Depending on the flow direction of the liquid and the temperature difference between the reactor temperature and liquid in the jacketed housing, the temperature gradient of section B can be adjusted to be increasing or decreasing with flow direction or to be non-existent.

Both temperature and/or concentration gradients can be used to influence key properties of the produced polymer. Such key properties are molecular weight distribution and/or comonomer distribution or other properties related to these distributions and the melting temperature. Generally, polymer microstructure properties, such as molecular weight distribution and comonomer distribution, are affected by the concentrations of different components in the reactor, i.e. monomer, comonomer and chain transfer agents as hydrogen, and especially the concentration ratios of comonomer to monomer and hydrogen to monomer as well as the polymerization temperature. The local change in these variables along the reactor length and diameter creates gradients that result in variation in polymer properties.

In summary, a reactor assembly used in the process of the present invention and in particular the combination of a draft tube with a helical ribbon type stirrer has various inter-correlated effects: A single liquid phase can be adjusted in solution polymerization processes even at conditions, which normally would result in phase separation. This is due to the high shear stresses applied by the stirrer to the bulk components in the reactor. Temperature/concentration gradients can be utilized in the process while maintaining high homogeneity of the liquid phases. E.g. gradients can be implemented and the phase could be kept a single phase. More specifically, temperature gradients could be introduced while avoiding concentration gradients and vice versa. In a preferred embodiment the reactants are introduced to the reactor (1) via at least one inlet (4) at a temperature below the precipitation temperature of the produced polymer.

Preferably, in the reactor assembly according to the present invention, the at least one inlet (4) is located in a lower half of the reactor (1) and the outlet (5) is located in an upper half of the reactor (1). More preferably, in the reactor assembly according to the present invention, the at least one inlet (4) is located in section (C) and the outlet (5) is located in section (A). Typically, CSTR (continuous stirred-tank reactor) liquid reactors are operated in a vertical design, wherein the reactants are introduced in the lower half and the products are withdrawn from the upper half of the reactor.

The draft tube is preferably mounted in the reactor so that the upper (10) and lower openings (11) are accessible by the fluid. Also according to preferred embodiments, the stirrer (12) and in particular the bottom plate (16) can freely rotate around the draft tube. In an embodiment, where the top plate is shaped as a ring and the bottom plate is a plate, the draft tube preferably extends to the upper part of the reactor and e.g. has parts of its walls connected to the reactor wall.

In other embodiments, the stirrer (12) can rotate within the draft tube (6) and alternatively can be fixed on the outer side of the draft tube(6).

The stirrer (12) is preferably driven by a rotating shaft connected to the bottom plate (16). Said rotating shaft preferably extends through a stuffing box located at the bottom of the reactor (1). The rotating shaft can be driven by any means known in the art, e.g. by an electrical motor.

In a preferable embodiment of the reactor assembly used in the process of the invention the reactor (1) has a substantially cylindrical shape, preferably has a cylindrical shape. A cylindrical shape ensures best mixing inside the reactor due to the rotating stirrer. Hence, the axis of the draft tube (8) and the axis of the reactor (9) are substantially parallel, preferably are parallel, most preferably are coincident. Such a setup ensures that the mixing patterns applied by the stirrer (12) are essentially equal in every rotation symmetrically identical point in the reactor (1).

When the axis of the draft tube (8) and the axis (15) of the stirrer blade (14) are coincident, several preferable arrangements are possible. Thus, the stirrer blade (14) may be arranged surrounding the draft tube (6) or may be arranged inside the draft tube (6) as long as the axis (15) of the stirrer blade (14) is coincident with respect to the draft tube (6). In another embodiment, both arrangements can be used simultaneously.

In an even more preferred embodiment of the invention, the reactor assembly used in the process of the present invention comprises a cylindrical reactor housing (2).

The reactor housing (2) may also comprise a non-cylindrical shape with top and bottom heads being hemispherical or korbbogen (torisperical), semi-eliptical, dished, wherein top and bottom heads may be of different shape.

In even more preferred embodiments of the invention, the reactor assembly used in the process of the present invention has a closest distance (21) between the reactor housing (2) and the stirrer blade (14) in the range of from 1 to 20 mm/m, preferably from 1 to 10 mm/m, more preferably from 2 to 8 mm/m, and most preferably from 3 to 7 mm/m. It is preferred that the closest distance (21) between the reactor housing (2) and the stirrer blade (14) is between 0.1 and 1 %, more preferably between 0.2 and 0.8 %, and even more preferably between 0.3 and 0.7 %, of the inner diameter of the housing (2).

In such reactor assemblies, the stirrer blade (14) follows the walls of the reactor (1). If the closest distance is below the lower value, risk of blockage of the stirrer is high either by heat extension or by precipitated polymer. On the other hand, if the closest distance is higher than the provided range, the advantageous effect described in the following is not significant anymore. Such configuration ensures high mass transfer rates especially for higher viscosity solution. As a further advantage of such a preferred embodiment, the heat transfer rates can be significantly improved.

In another preferred embodiment of the reactor assembly used in the process of the present invention, the draft tube (6) of the reactor (1) comprises at least one side opening (20). This opening forms a short cut for flow between section D and section B. In preferred modes of the present invention, at least a part of the reaction mixture present in section D may directly be moved to section B (step IIa). Hence, the flow being forced through this opening does not have to enter section C to get into section B again. As an effect of such a setup, the concentration of reactants in this flow is not increased in comparison to the flow to be forced to flow through section C. Therefore, the side opening (20) in the draft tube (6) relatively decreases the concentration of reactants in the section B. With the help of this side opening, the gradient in monomer/comonomer concentration in section D, C and B can be adjusted. The larger the opening is, the more flow from section D will enter section B without take-up of fresh reactant resulting in a smaller concentration gradient. Also the position of the opening in the draft tube influences the gradient of concentration. The closer the upper opening (10) of the draft tube (6) is positioned to the lower opening (11) of the draft tube (6), the earlier the gradient will be influenced by the opening. Therefore, preferably, the at least one side opening (20) of the draft tube (6) is positioned in the lower half of the draft tube (6), more preferably in the lower quarter, even more preferably in the lower eighth of the draft tube. The shape of the at least one side opening (20) of the draft tube (6) can be generally any shape. However, shapes allowing for maximum throughput are preferably, such as rectangles or circles. Most preferred shapes for the side openings (20) are circles.

In another preferred embodiment of the present invention, the side opening (20) of the draft tube (6) is implemented by a gap between the draft tube (6) and the bottom plate (16) along the axis of the reactor (9). Preferably, the length of the gap along the axis of the reactor (9) is in the range of from 100 to 400 mm, preferably 150 to 350 mm, and most preferably 170 to 300 mm. Likewise, the length of the gap along the axis of the reactor (9) is in the range of from 3 to 10% of the height of the reactor, preferably 4 to 6%, and most preferably 5 to 8%.

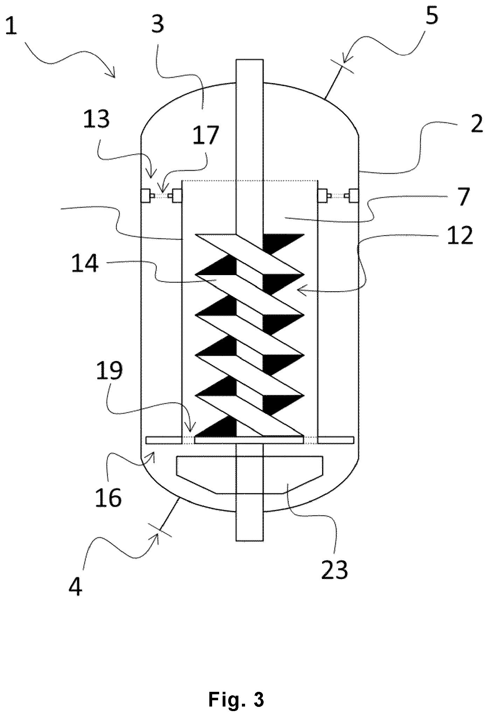

In another preferred embodiment, in the reactor assembly used in the process of the present invention as depicted in Figure 3, the stirrer (12) further comprises at least one stirrer baffle (22) connecting the top plate (13) and the bottom plate (16), wherein the at least one stirrer baffle (22) extends through the stirrer blade (14). More preferably, the at least one stirrer baffle (22) extends perpendicular from the top plate (13) to the bottom plate (16). One advantage of this setup is that the helical stirrer blade (14) is mechanically stabilized. In particular for systems with high viscosity, the shear forces are high and can lead to deformation of the helical ribbon blade (14). The stirrer baffles (22) support the whole stirrer and lead to less deformation and better force transfer to the bulk. As a second effect, these stirrer baffles (22) enhance the mixing inside the stirrer section (B) and thus improve the homogeneity of the product. Furthermore, they ensure that no hot spots are formed inside the reactor.

Preferably, the ratio of the tangential length of the reactor (1) to the largest diameter of the reactor (1) is in the range of from 1.1 to 4, more preferably from between 1.2 to 3, and most preferably from 1.2 to 2.5. Even more preferably, the ratio of the height of the reactor (1) to the largest diameter of the reactor (1) is in the range of from 1.1 to 4, more preferably from 1.2 to 3, and most preferably from 1.2 to 2.5.

In another preferred embodiment of the invention, the stirrer (12) comprises two helical ribbon stirrer blades (14), which are separated by 180° rotation to each other. A second stirrer blade significantly enhances the throughput of the stirrer. Preferably, the distance between the lower surface of the top plate (13) and the bottom plate (16) is in the range of 1 to 3 times the pitch of the helix of the helical ribbon stirrer blade (14), wherein the pitch of a helix is the height of one complete helix turn, measured parallel to the axis of the helix, preferably twice the pitch of the helix of the helical ribbon stirrer blade (14).

Preferably, the helix of the helical ribbon stirrer blade (14) is a circular helix.

Furthermore, preferably, the ratio between the pitch of the helix of the helical ribbon stirrer blade (14) and the largest diameter of the reactor (1) is in the range of from 0.2 to 1.0, preferably from 0.3 to 0.9, and most preferably from 0.5 to 0.7.

Likewise, preferably, the ratio between twice the pitch of the helix of the helical ribbon stirrer blade (14) and the tangential height of the reactor (1) is in the range of from 0.4 to 1.1, preferably from 0.6 to 0.9, and most preferably from 0.7 to 0.8.

Preferably, the ratio of the area of the projection of the stirrer blade (14) along the axis (15) of the stirrer blade (14) to the cross-sectional area of the draft tube (6) is in a range from 1 to 6, preferably 1.5 to 4 and most preferably 1.8 to 2.5. Alternatively, the ratio of the area of the projection of the stirrer blade (14) along the axis (15) of the stirrer blade (14) to the cross-sectional area of the draft tube (6) is close to 1.

Preferably, the top plate (13) is provided as a ring or a double ring, more preferably with studs. Such a ring is preferably located above the top of the stirrer blade (14), which is in such an embodiment preferably located lower than the upper opening (10) of the draft tube. Even more preferably, the top plate (13) is formed by two circular rings, in between which small vertical plates are welded. Preferably, between 4 and 16 vertical blades, more preferably between 6 and 14 vertical blades and most preferably between 8 and 12 vertical blades are welded between the two rings with a gap in between representing the at least one first opening (16) of the top plate (13).

Preferably, the bottom plate (16) is formed by a circular plate, on which the helicon ribbon stirrer blade rests. The bottom plate (16) is equipped with at least one first opening (18) to allow fluid to flow up and downwards and which rotates with the stirrer blade. The stirrer blade (14) pumps the fluid upwards through the holes (18) in the plate upon rotation. Most preferably, the bottom plate (16) is a plate comprising two rings supported by spokes.

In order to achieve the separation in sections most efficiently, the ratio between the closest distance (25) between the edge of the bottom plate (16) and/or the top plate (13), i.e. the circumference of the plate, and the inner wall of the reactor(1) and the diameter of the reactor (1) is in the range of from 10 to 60 mm/m preferably from 15 to 50 mm/m and more preferably from 20 to 45 mm/m. If the closest distance is below this value, risk of blockage of the stirrer is high either by heat extension or by precipitated polymer. On the other hand, if the closest distance is higher than the provided range, the difference between the sections A, B, and C is not so distinct anymore, as more bulk components can pass the top or bottom plates without being subject to the created shear forces. It should, however, be mentioned that also such behavior can be beneficial for certain applications, i.e. product properties. Therefore, this limitation is only essential if a distinct differentiation between the sections A, B and C is necessary.

Preferably, as depicted in Figure 4, the bottom plate (16) further comprises at least one impeller blade (23), wherein the at least one impeller blade (23) extends from the bottom plate (16) into section C. More preferably, the bottom plate comprises 1 to 5, even more preferably 2 to 4, and most preferably 3 impeller blades. Most preferably, the at least one impeller blade (23) extends perpendicular from the bottom plate (16). Said impeller blades (23) act as an impeller stirrer enhancing the flow generated by the stirrer blade (14) of the stirrer (12).

Usually, the catalyst feed and the reactant stream are introduced into section C separately from each other. Such an arrangement prevents spontaneous polymerization already in the inlet. Preferably, the catalyst is introduced using a pipe into section C. More preferably, also the catalyst and the activator are separately added via two distinct or one double pipe into section C.

In a further preferred embodiment of the invention, the reactor assembly used in the process of the invention comprises a dip pipe (24) for introducing the catalyst in section D (the draft tube (6)) for feeding catalyst into the reactor. With the current flow pattern the catalyst will be instantly transferred to section C encountering the reactant stream added via the first inlet. Preferably, the dip pipe (24) is mounted to the wall of the draft tube (6). Preferably, the outlet of the dip pipe (24) is positioned in the lower half of the draft tube (6), more preferably in the lower quarter, even more preferably in the lower eighth. Another preferred position is close to the bottom plate (16) of the stirrer (12).

The dip pipe (24) enables custom adjustment of the catalyst concentration in the draft tube. Therefore, not only enhanced turnover numbers, but also a gradient in view of catalyst concentration can be achieved in the draft tube. In parallel to the catalyst also activator can be added via the dip pipe (24). In a more preferred embodiment, activator and catalyst are fed together in one dip pipe (24) comprising two individual piping inside.

Process according to the present invention

Generally, the present invention can be used in various polymerization processes. However, it is in particular useful with solution polymerization reactions.

*Polymerization process*

The process of the present invention could be any process for the production of a polymer. However, preferably, the present invention is applicable for supercritical, solution and advanced solution polymerization processes. More preferably are continuous supercritical, solution and advanced solution polymerization processes. Most preferably, the production process comprises a continuous solution polymerization process.

Preferably, the polymer produced in the present invention is an olefin homo- or copolymer. More preferably, the monomer of this polymer is selected from an $\alpha$-olefin having a carbon atom number of 2 to 4, preferably ethylene, propylene, 1-butene, most preferably from ethylene. Preferably, the homopolymer is a polyethylene homopolymer.

Most preferably the polymer is a copolymer, the comonomer preferably is different from the $\alpha$-olefin monomer and is selected from the group consisting of linear and cyclic olefins and $\alpha$-olefins having from 2 to 12 carbon atoms and mixtures thereof. More preferably, the comonomer is an $\alpha$-olefin different from the olefin monomer and is selected from the group consisting of linear olefins having from 2 to 12 carbon atoms and mixtures thereof, preferably 3 to 10 carbon atoms, most preferably 1-butene or 1-octene.

Most preferably, the olefin polymer of the present invention is a polymer having a $MFR_2$ value of between 0.2 and 1000 g/10 min, preferably between 0.5 and 100 g/10 min, and most preferably between 0.5 and 50 g/10 min.

Preferably, the polymer has a molecular weight of lower than 250 kg/mol, preferably lower than 150 kg/mol and most preferably lower than 100 kg/mol.

The density of the polymer of the present invention is between 960 and 845 kg/m$^3$, preferably between 940 and 850 kg/m$^3$, and most preferably between 930 and 855 kg/m$^3$.

In a most preferred embodiment, the polymer is produced in a solution polymerization process as disclosed in the following.

The polymerization is typically conducted in the presence of an olefin polymerization catalyst. Preferably, the olefin polymerization catalyst may be a single site polymerization catalyst, more preferably a metallocene polymerization catalyst or a Ziegler-Natta polymerization catalyst.

Such Ziegler-Natta polymerization catalysts comprise a transition metal compound, preferably a metal compound of group 4, such as a compound of titanium, zirconium or hafnium.

The transition metal compound may be a halide of the transition metal, such as a trihalide or a tetrahalide.

Typically, the transition metal halide is a titanium halide, such as titanium trichloride or titanium tetrachloride.

The transition metal compound may also be a transition metal alkyl or transition metal alkoxide compound. Such compounds are often contacted with a chlorinating compound, such as an alkyl chloride.

The transition metal compound may be combined with a group 2 metal halide, such as magnesium halide, like magnesium dichloride, and/or with a group 13 metal halide, such as aluminium or boron halide, like aluminium trichloride. Such catalysts are well known in the art and are referred to as Ziegler-Natta catalysts. A Ziegler-Natta catalyst is typically used in combination with a cocatalyst, such as an aluminium alkyl.

The transition metal compound may also be a compound comprising an organic ligand having a cyclopentadienyl structure, such as cyclopentadienyl, fluorenyl or indenyl. Such organic ligands may also bear substituents. The transition metal may have one or two such organic ligands, which optionally are bridged, and two or three other ligands, such as alkyl, aryl or halide. Such catalysts are also well known in the art and are referred to as metallocene catalysts.

The polymerization catalyst may be a Ziegler-Natta catalyst as disclosed in EP 280352 A, EP 280353 A and EP 286148 A, it may be a metallocene catalyst as disclosed in WO 1993025590 A, US 5001205 A, WO 1987003604 A, US 5001244 A, WO 2018/178151 A1, WO 2018/178152 A1, WO 2018/108917 A1, and WO 2018/108918 A1, or it may be a combination of these. In addition, other suitable catalysts, such as late transition metal catalysts, can be used.

In a solution polymerization process an inert solvent is also present. The solvent is in liquid or supercritical state in the polymerization conditions. The solvent is typically and preferably a hydrocarbon solvent. The liquid hydrocarbon solvent used is preferably a $C_{5-12}$-hydrocarbon, which may be unsubstituted or substituted by $C_{1-4}$ alkyl group such as pentane, methyl pentane, hexane, heptane, octane, cyclohexane, methylcyclohexane and hydrogenated naphtha. More preferably, unsubstituted $C_{6-10}$-hydrocarbon solvents are used.

Other components may also be added into the reactor. It is known to feed hydrogen into the reactor for controlling the molecular weight of the polymer formed during the polymerization. In addition, different kinds of activity boosters, or scavengers to reduce impurities or activity retarders may be used for controlling the activity of the catalyst.

Typically, the content of the polymer in the product stream comprising the solvent, the polymer and the unreacted monomer and optionally comonomer is from 10 to 50 wt%, preferably from 10 to 40 wt%, more preferably from 10 to 35 wt%.

The present invention is preferably carried out in a process, in which the viscosity of the components inside the reactor under polymerization conditions is between 0.001 to 15 Pa s, preferably between 0.01 and 2 Pa s. In such a high viscosity setup the high mixing capabilities of the present invention are in particular useful. Said reactor assembly is operated in that the reactants are introduced into the at least one inlet (4) while the stirrer is rotated. The rotation direction of the stirrer is chosen depending on the helical orientation of the stirrer blade (14) in that the rotation of the stirrer results in an upward movement, i.e. from section C through section B to section A, of the bulk components in the reactor. These components are then forced through the at least one second opening (19) in the bottom plate (16) creating a counter flow to the reactants introduced via the at least one inlet (4). As a result, the flow of reactants is mixed with the flow of bulk components and forced through the at least one first opening (18) of the bottom plate (16) into section B. The combined flow of bulk components and reactants is forced to flow upwards within section B into section A. From there, a part of this flow is reintroduced into section D and forced to flow down towards section C, while another part is withdrawn from the reactor through the at least one outlet (5).

Preferably, in the process according to the invention the optional bottom plate (16) further comprises at least one impeller blade (23), wherein the at least on impeller blade (23) extends from the bottom plate (16) into section C, and wherein the process further comprises the step of further moving the liquid from section C via section B to section A.

In the process according to the present invention, preferably, in step II the stirrer is rotated at a rotation speed of 100 rpm or lower.

Preferably, in the process according to the invention, the circulation time of the liquid in the reactor is below 20 s.

In the process of the present invention the mixer device may preferably comprise a drive selected from a variable speed drive (VSD), a variable frequency drive (VFD), variomatic motor and mechanical geared speed adjuster.

**Examples**

In the following examples melt flow rate, number average molecular weight (Mn), weight average molecular weight (Mw) and polydispersity (Mw/Mn) may be determined by the following methods.

The melt flow rate (MFR) is determined according to ISO 1133. The MFR is measured with a load of 5.0 Kg at 190°C and /or with a load of 2.16 Kg at 190°C. Molecular weight averages (Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i / M_i)}$$

$$M_w = \frac{\sum_{i=1}^{N} (A_i \; x \; M_i)}{\sum A_i}$$

For a constant elution interval $\Delta V_i$, where $A_i$ and $M_i$ are the chromatographic peak slice area and polyolefin molecular weight (MW).

A PolymerChar GPC instrument equipped with infrared (IR) detector is used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set is calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples are prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

Two reactors are used for the examples a 10 m³ reactor and a 20 m³ reactor. Some details of the reactors are presented in the table below.

| Reactor volume (m3) | Reactor diameter (m) | Tangential height (m) | Outside diameter of stirrer (m) | Diameter of draft tube (m) | Pitch of stirrer (m) |
|---|---|---|---|---|---|
| 10 | 1.85 | 2.9 | 1.83 | 1.07 | 1.1 |
| 20 | 2.38 | 3.73 | 2.36 | 1.36 | 1.4 |

The blade of the helix mixer (14) is located between the draft tube (6) and the reactor wall (2), so in section B, for all examples.

Comparative Examples CE1a and CE1b and Inventive Examples IE1a, IE1b, and IE1c

In Comparative Example CE1a the circulation time in a 10 m³ reactor with a macroscopic mixing downwards in the helix and upwards in the draft tube for a polymer solution with a viscosity of 0.1 Pa·s is about 32 s. The mixing speed is 100 rpm.

In Comparative Example CE1b the circulation time in a 20 m³ reactor with a macroscopic mixing downwards in the helix and upwards in the draft tube for a polymer solution with a viscosity of 0.1 Pa·s is about 55 s. The mixing speed is 100 rpm.

In Inventive Example IE1a the circulation time in a 10 m³ reactor with a macroscopic mixing upwards in the helix and downwards in the draft tube for a polymer solution with a viscosity of 0.1 Pa·s is surprisingly reduced to less than 20 s at the same mixing speed of 100 rpm.

In Inventive Example IE1b the circulation time in a 20 m³ reactor with a macroscopic mixing upwards in the helix and downwards in the draft tube for a polymer solution with a viscosity of 0.1 Pa·s is surprisingly reduced to just less than 20 s at the same mixing speed of 100 rpm.

Moreover, in Inventive Example IE1c the circulation time in a 20 m³ reactor with a macroscopic mixing upwards in the helix and downwards in the draft tube for a polymer solution with a viscosity of 0.1 Pa·s can be controlled by a variable speed drive. In this Inventive Example IE1c the mixing speed is reduced to 40 rpm and the circulation time can be increased to about 35 s.

Hence, Inventive Examples IE1b and IE1c show that the circulation time can be controlled by the mixing speed when the macroscopic flow direction is downwards in the draft tube.

Comparative Example CE2 and Inventive Examples IE2a, IE2b, and IE2c

Table 1

| Example | Reactor volume (m3) | Mixing speed (rpm) | Flow direction in draft tube | Viscosity of polymer solution (Pas) | Mn (g/mol) | Mw (g/mol) | Polydispersity (Mw/Mn) |
|---------|---------|---------|---------|---------|---------|---------|---------|
| CE2 | 10 | 100 | Up | 0.17 | 15600 | 31200 | 2.0 |
| IE2a | 10 | 100 | down | 0.17 | 16000 | 31500 | 2.0 |
| IE2b | 10 | 40 | down | 0.17 | 15500 | 33400 | 2.2 |
| IE2c | 10 | 20 | down | 0.17 | 15500 | 37800 | 2.4 |

Comparative Example CE2 and Inventive Examples IE2a, IE2b, and IE2c are made using a single site catalyst and a co-activator in solution ethylene 1-octene co-polymerization at a temperature of about 195 °C and a pressure of 85 Barg. The solvent used for the examples is a C6 mixture.

The produced polymer has about 21 wt.% of 1-octene as comonomer and a melt flow rate of 10 g/10 min.

As can be seen from the Inventive Examples, the polydispersity index and, hence, the broadness of the molecular weight distribution can be controlled by the mixing speed in case the flow direction in the draft tube is downwards (cf. Table 1).

Comparative Example CE3 and CE4 and Inventive Examples IE3a, IE3b, IE3c, IE4a, IE4b, and IE4c

Table 2

| Example | Reactor volume (m3) | Mixing speed (rpm) | Flow direction in draft tube | Viscosity of polymer solution (Pas) | Mn (g/mol) | Mw (g/mol) | Polydispersity (Mw/Mn) |
|---------|---------|---------|---------|---------|---------|---------|---------|
| CE3 | 10 | 100 | up | 1.00 | 35200 | 69600 | 2.0 |
| IE3a | 10 | 100 | down | 1.00 | 35900 | 70700 | 2.0 |
| IE3b | 10 | 40 | down | 1.00 | 35900 | 73200 | 2.0 |
| IE3c | 10 | 20 | down | 1.00 | 34800 | 80000 | 2.3 |
| CE4 | 20 | 100 | up | 1.00 | 35900 | 70500 | 2.0 |
| IE4a | 20 | 100 | down | 1.00 | 35900 | 70400 | 2.0 |
| IE4b | 20 | 40 | down | 1.00 | 35700 | 72100 | 2.0 |
| IE4c | 20 | 20 | down | 1.00 | 34900 | 74000 | 2.1 |

Comparative Example CE3 and Inventive Examples IE3a, IE3b, and IE3c are made using a single site catalyst and a co-activator in solution ethylene 1-octene co-polymerization at a temperature of 178 °C and a pressure of 85 Barg. The solvent used for the examples is a C6 mixture.

The produced polymer had about 29 wt% of 1-octene as comonomer and a melt flow rate of 1.0 dg/min.

As can be seen from the Inventive Examples, the polydispersity index and, hence, the broadness of the molecular weight distribution, can be controlled by the mixing speed in case the flow direction in the draft tube is downwards (cf. Table 2). Moreover, energy can be saved, as it is clear from IE3b that the mixing speed can be reduced to 40 rpm and the polymer properties presented by the molecular weight distribution are the same as for CE3 and IE3a, hence the difference is small and can be neglected (Mn, Mw and PDI).

Comparative Example CE4 and Inventive Example IE4a, IE4b, and IE4c are made using a single site catalyst with a co-activator in solution ethylene 1-octene co-polymerization at a temperature of 178 °C and at a pressure of 85 Barg. The solvent used for the examples is a C6 mixture. The used reactor has a volume twice as large for the previous examples (CE3, IE3a, IE3b, IE3c) and the feed flows to the process are doubled and so the production. The same polymer density and MFR are produced having a 1-octene fraction of about 29 wt% in the polymer. The melt flow rate is about 1.0 dg/min.

The scale up from 10 to 20 m$^3$ reactor size is not causing a problem for the polymer properties, presented by the molecular weight distribution. The Mw can be increased by reducing the mixing speed in comparative examples and polydispersity can be increased. The same narrow molecular weight distribution can be obtained at the scaled-up reactor as the previous examples (CE3, IE3a, IE3b, IE3c). Furthermore, the circulation time can be kept constant when upscaling from 10 to 20 m$^3$.

The hydraulic power consumption for Comparative Example CE4 is about 400 kW, the average circulation time is about 12 s. The hydraulic power consumption for Inventive Example IE4a is also about 400 kW, the average circulation time is about 10 s. The hydraulic power consumption of Inventive Example IE4b is reduced to about 45 kW resulting in average circulation time of about 18 s. The polymer properties are not significant effected. Hence the polydispersity is still 2. The examples show a clear energy saving while keeping the polymer properties similar.

Comparative Example CE5a and CE5b and Inventive Examples IE5a and IE5b

Producing polymer with 21wt% octene and a melt index of 10 dg/min in a 10 m$^3$ reactor at fixed rotation speed of 100 rpm but at varying viscosity shows clear the benefit of the invention. The comparative example CE5a and CE5b show an increase in polydispersity without manipulating the mixing speed due to lower viscosity. A lower viscosity means less backmixing. The inventive examples IE5a and IE5b show a controlled MWD as presented by the polydisperisty (PDI) of 2.0 when the viscosity is adjusted. Also at lower viscosity the process stays under control.

Table 3

| Example | Reactor volume (m3) | Mixing speed (rpm) | Flow direction in draft tube | Viscosity of polymer solution (Pas) | Polydispersity (Mw/Mn) |
|---|---|---|---|---|---|
| CE5a | 10 | 100 | up | 0.03 | 2.35 |
| CE5b | 10 | 100 | up | 0.17 | 2.0 |
| IE5a | 20 | 100 | down | 0.03 | 1.99 |
| IE5b | 20 | 100 | down | 0.17 | 1.94 |

**Claims**

1. A process for polymerization of at least one olefin monomer in a polymerization reactor assembly, the polymerization reactor assembly comprising a reactor (1) having a housing (2) defining an inner space (3), the reactor (1) comprising

   a) at least one inlet (4);
   b) at least one outlet (5);
   c) a draft tube (6) having a substantially cylindrical shape and an inner space (7), wherein the draft tube (6) is located within the inner space (3) of the reactor (1) so that an upper opening (10) and a lower opening (11) of the draft tube (6) are fluidly connected with the inner space (3) of the reactor (1), and
   d) a stirrer (12) located within the inner space (3) of the reactor (1) and comprising a stirrer blade (14) having a helical shape, wherein the axis (8) of the draft tube and the axis (15) of the stirrer blade (14) are coinciding, the stirrer blade (14) extending concentrically with respect to the draft tube (6) and the housing (2) of the reactor (1), and
   e) secondary mixing means (23) for mixing the fluid inside the reactor (1) by rotating motion,

   wherein the inner space (3) of the reactor (1) comprises sections A, B, C, and D, wherein

   - section A is the space defined by the upper end of the housing (2) of the reactor (1) and a first plane (10a) oriented transversally to the axis (8) of the draft tube and arranged at the upper end of the stirrer (12),
   - section B is the space defined by the housing (2) of the reactor (1), the outer surface of the draft tube (6), the first plane (10a) and a second plane (11a) oriented transversally to the axis (8) of the draft tube and arranged at the lower opening (11) of the draft tube (6),
   - section C is the space defined by the lower end of the housing (2) of the reactor (1) and the second plane (11a), and
   - section D is the inner space (7) of the draft tube (6),

wherein the stirrer (12) is rotatable inside the housing (2) of the reactor (1) to provide a mixing motion to fluids if present inside the reactor (1),

the process comprising the steps of

    I. introducing the at least one olefin monomer, at least one polymerization catalyst, and at least one solvent via the at least one inlet (4) into section C to form a reaction mixture,

    II. rotating the stirrer (12) to force at least a part of the reaction mixture from section C via section B to section A and from section A via section D to section C,

    III. thereby polymerizing the at least one olefin monomer forming a polymer in said reaction mixture,

    IV. withdrawing at least a part of the reaction mixture via the at least one outlet (5) from section A to obtain an olefin polymer as a product.

2. The process according to claim 1, wherein the draft tube (6) further comprises a side opening (20) and wherein the process further comprises the step of IIa. moving at least a part of the reaction mixture directly from section D to section B.

3. The process according to claim 1 or 2, wherein the secondary mixing means (23) comprise at least one impeller blade.

4. The process according to any one of the preceding claims, wherein the stirrer blade (14) is installed in section B.

5. The process according to claim 4, wherein the closest distance (21) between the reactor housing (2) and the stirrer blade (14) is between 0.1 and 1 % of the inner diameter of the housing (2).

6. The process according to any one of the preceding claims 1 to 3, wherein the stirrer blade (14) is installed in section D.

7. The process according to any one of the preceding claims, wherein the stirrer (12) further comprises:

    a top plate (13) located above the upper end of the stirrer blade (14), and/or

    a bottom plate (16) located below the lower end of the stirrer blade (14).

8. The process according to claim 7, wherein

    the top plate (13) has at least one first opening (17) fluidly connecting section A and section B, and/or

    the bottom plate (16) has at least one first opening (18) fluidly connecting section B and section C, and/or

    the bottom plate (16) has at least one second opening (19) fluidly connecting section C and section D.

9. The process according to any one of claims 3, 7 and 8, wherein the at least one impeller blade extends from the bottom plate (16) into section C.

10. The process according to any one of the preceding claims, wherein polymerization catalyst is introduced into section D by a dip pipe (24) mounted to the wall of the draft tube (6).

11. Process according to any one of the preceding claims, wherein the mixer device comprises a drive selected from a variable speed drive (VSD), a variable frequency drive (VFD), variomatic motor and mechanical geared speed adjuster .

12. Process according to any one of the preceding claims, wherein the at least one monomer is an olefin, preferably an alpha-olefin, more preferably ethylene, propylene or 1-butene.

13. Process according to any one of the preceding claims, wherein the polymerization is conducted in the presence of a comonomer, preferably an alpha olefin comonomer.

14. Process according to any one of the preceding claims, wherein the polymerization is a solution liquid-phase polymerization, preferably a single phase solution polymerization, conducted in the presence of an inert solvent.

15. Process according to any one of the preceding claims, wherein the polymerization is conducted in the presence of a single site polymerization catalyst, preferably a metallocene catalyst.

Fig. 1

Fig. 2

Fig. 3

Fig. 4

Europäisches
Patentamt

European
Patent Office

Office européen
des brevets

# EUROPEAN SEARCH REPORT

Application Number

EP 23 15 8992

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 921 906 A (MEYER PETER J N [NL] ET AL) 1 May 1990 (1990-05-01) * column 5, lines 7-53; claims; figures; examples * | 1-15 | INV. B01J19/00 B01J19/18 C08F222/08 B01J19/20 |
| A | US 2 444 848 A (PURVIN ROBERT L) 6 July 1948 (1948-07-06) * claims; figures * | 1-15 | |
| A | US 3 567 402 A (CHRISTENSEN DON C) 2 March 1971 (1971-03-02) * claims; figures * | 1-15 | |
| A | US 3 392 963 A (DIERENDONCK LAURENTIUS L VAN ET AL) 16 July 1968 (1968-07-16) * claims; figures * | 1-15 | |
| A | GB 1 404 163 A (MITSUI TOATSU CHEMICALS) 28 August 1975 (1975-08-28) * claims; figures * | 1-15 | TECHNICAL FIELDS SEARCHED (IPC) B01J C08F |

The present search report has been drawn up for all claims

| Place of search | Date of completion of the search | Examiner |
|---|---|---|
| Munich | 18 July 2023 | Serra, Renato |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 15 8992

This annex lists the patent family members relating to the patent documents cited in  the above-mentioned European search report.
The members are as contained in the European Patent Office EDP file on
The European Patent Office is in no way liable for these particulars which are merely given for the purpose of information.

18-07-2023

| Patent document cited in search report | | Publication date | Patent family member(s) | | Publication date |
|---|---|---|---|---|---|
| US 4921906 | A | 01-05-1990 | AT | E68192 T1 | 15-10-1991 |
| | | | EP | 0202706 A1 | 26-11-1986 |
| | | | ES | 8707979 A1 | 01-09-1987 |
| | | | JP | H082933 B2 | 17-01-1996 |
| | | | JP | S6211710 A | 20-01-1987 |
| | | | KR | 860009042 A | 19-12-1986 |
| | | | NL | 8501255 A | 01-12-1986 |
| | | | US | 4921906 A | 01-05-1990 |
| US 2444848 | A | 06-07-1948 | NONE | | |
| US 3567402 | A | 02-03-1971 | NONE | | |
| US 3392963 | A | 16-07-1968 | AT | 279561 B | 10-03-1970 |
| | | | BE | 691722 A | 23-06-1967 |
| | | | CH | 448973 A | 31-12-1967 |
| | | | DE | 1542496 A1 | 26-03-1970 |
| | | | FR | 1506770 A | 22-12-1967 |
| | | | GB | 1151605 A | 14-05-1969 |
| | | | NL | 6516783 A | 26-06-1967 |
| | | | SE | 302113 B | 08-07-1968 |
| | | | US | 3392963 A | 16-07-1968 |
| GB 1404163 | A | 28-08-1975 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4921906 A
- US 6319996 B1
- US 20180050318 A1
- EP 280352 A
- EP 280353 A
- EP 286148 A
- WO 1993025590 A
- US 5001205 A
- WO 1987003604 A
- US 5001244 A
- WO 2018178151 A1
- WO 2018178152 A1
- WO 2018108917 A1
- WO 2018108918 A1